# EUROPEAN PATENT APPLICATION

(11) **EP 4 167 659 A1**
(43) Date of publication of application: **19.04.2023**
(21) Application number: 20940907.7
(22) Date of filing: 16.06.2020
(51) Int. Cl.: H04W 64/00, H04W 72/04, H04L 5/00

(54) **WIRELESS COMMUNICATION METHOD AND APPARATUS, TERMINAL, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2020/096403
(87) International publication number: WO 2021/253240

(57) **Abstract**

Disclosed in embodiments of the present disclosure are a wireless communication method and apparatus, a terminal, and a storage medium. A first aspect of the embodiments of the present disclosure provides a wireless communication method, comprising: transmitting communication information on a first bandwidth part (BWP); and transmitting a positioning reference signal on a second BWP when transmitting the communication information on the first BWP, wherein the communication information does not comprise the positioning reference signal.

## Description

### TECHNICAL FIELD

Embodiments of the disclosure relate to the field of wireless communication but are not limited to the field of wireless communication, and in particular to a wireless communication method, a wireless communication apparatus, a terminal, and a storage medium.

### BACKGROUND

A downlink positioning reference signal (PRS) and a sounding reference signal (SRS) for uplink positioning are defined in a new radio (NR) system of 5^{th} generation (5G) communication protocol release 16 (R16). The PRS supports periodic sending and PRS resource repetitions in a period. Regarding the repetitions, the number of repetitions in the period and an interval between each two repetitions may be further configured. The interval may be N slots, where N is a natural number.

However, studies have found that transmissions of PRS or SRS in the related art may cause problems such as interruption of service data transmission of a terminal.

### SUMMARY

Embodiments of the disclosure provide a wireless communication method, a wireless communication apparatus, a terminal, and a storage medium.

According to a first aspect of embodiments of the disclosure, a wireless communication method is provided and includes: transmitting communication information on a first bandwidth part (BWP); and transmitting a positioning-purpose reference signal on a second BWP while transmitting the communication information on the first BWP; in which the communication information does not include the positioning-purpose reference signal.

According to a second aspect of embodiments of the disclosure, a wireless communication apparatus is provided and includes: a first transmission module configured to transmit communication information on a first BWP; and a second transmission module configured to transmit a positioning-purpose reference signal on a second BWP while transmitting the communication information on the first BWP; in which the communication information does not include the positioning-purpose reference signal.

According to a third aspect of embodiments of the disclosure, a terminal is provided and includes: a processor, a transceiver, a memory, and an executable program stored on the memory and capable of being executed by the processor, in which the processor is configured to execute the executable program to perform the wireless communication method provided in any technical solution of the first aspect.

According to a fourth aspect of embodiments of the disclosure, a computer storage medium is provided. An executable program is stored in the computer storage medium. When the executable program is executed by a processor, the wireless communication method provided in any technical solution of the first aspect can be performed.

In technical solutions provided in embodiments of the disclosure, the communication information and the positioning-purpose reference signal are transmitted on two BWPs respectively, so that a transmission of the positioning-purpose reference signal and a transmission of the communication information are independent of each other and do not interfere with each other, thereby reducing an interruption of the transmission of the communication information which is caused by the transmission of the positioning-purpose reference signal, reducing a transmission switching interval between the positioning-purpose reference signal and the communication information, and further reducing a transmission delay and increasing a transmission rate.

### BRIEF DESCRIPTION OF THE DRAWINGS

The accompanying drawings, which are incorporated in and constitute a part of this specification, illustrate embodiments consistent with the disclosure and, together with the description, explain the principles of the disclosure.
FIG. 1 is a schematic diagram illustrating a wireless communication system, according to some embodiments.
FIG. 2 is a flowchart illustrating a wireless communication method, according to some embodiments.
FIG. 3 is a flowchart illustrating a wireless communication, according to some embodiments.
FIG. 4A is a schematic diagram illustrating a frequency domain relationship between a first BWP and a second BWP, according to some embodiments.
FIG. 4B is a schematic diagram illustrating a frequency domain relationship between a first BWP and a second BWP, according to some embodiments.
FIG. 4C is a schematic diagram illustrating a frequency domain relationship between a first BWP and a second BWP, according to some embodiments.
FIG. 4D is a schematic diagram illustrating a frequency domain relationship between a first BWP and a second BWP, according to some embodiments.
FIG. 5 is a schematic diagram illustrating a wireless communication apparatus, according to some embodiments.
FIG. 6 is a schematic diagram illustrating a user equipment (LTE), according to some embodiments.
FIG. 7 is a schematic diagram illustrating a base station, according to some embodiments.

### DETAILED DESCRIPTION

Reference will now be made in detail to some embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

Terms used in embodiments of the disclosure are merely for describing specific embodiments and are not intended to limit embodiments of the disclosure. The singular forms "a" and "the" used in embodiments of the disclosure and the appended claims are also intended to include a multiple form, unless other meanings are clearly represented in the context. It should also be understood that the term "and/or" used in the disclosure refers to any or all possible combinations including one or more associated listed items.

Although terms "first", "second", "third", and the like are used in embodiments of the disclosure to describe various information, the information is not limited to the terms. These terms are merely used to differentiate information of a same type. For example, without departing from the scope of embodiments of the disclosure, first information is also referred to as second information, and similarly the second information is also referred to as the first information. Depending on the context, for example, the term "if' or "in case" used herein may be explained as "when" or "while", or "in response to ..., it is determined that".

To better describe any embodiment of the disclosure, some embodiments of the disclosure take an application scenario of an intelligent electric meter control system as an example for illustrative description.

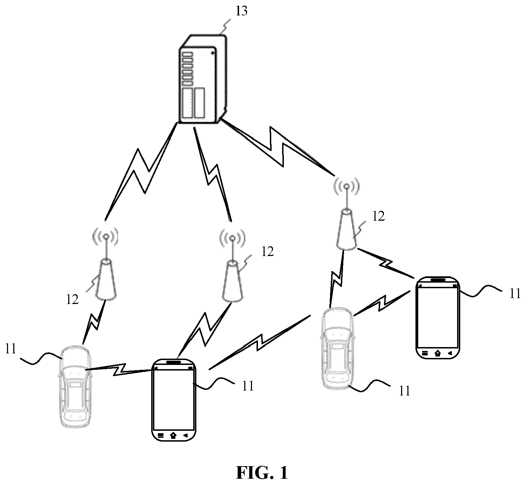

Referring to FIG. 1, FIG. 1 is a schematic diagram illustrating a wireless communication system, according to some embodiments. As illustrated in FIG. 1, the wireless communication system is a communication system based on cellular mobile communication technologies. The wireless communication system may include terminals 11 and base stations 12.

The terminal 11 may be a device that provides speech and/or data connectivity for a user. The terminal 11 may communicate with one or more core networks via a radio access network (RAN). The terminal 11 may be an Internet of Things (IoT) terminal, such as a sensor device, a mobile phone (or a "cellular" phone), and a computer having an IoT terminal, for example, a fixed, portable, pocket-sized, handheld, computer built-in, or vehicle-mounted device. For example, it may be a station (STA), a subscriber unit, a subscriber station, a mobile station, a mobile, a remote station, an access point, a remote terminal, an access terminal, a user terminal, a user agent, a user device, or a user equipment (LTE). Alternatively, the terminal 11 may also be an Industrial Internet of Things (IIoT) device, such as a forklift, an automatic assembly device, and the like. Alternatively, the terminal 11 may also be a device of an unmanned aerial vehicle. Alternatively, the terminal 11 may also be a vehicle-mounted device, for example, a trip computer with a wireless communication function or a wireless terminal externally connected to a trip computer. Alternatively, the terminal 11 may also be a roadside device, for example, a street light, a signal light, or other roadside devices with a wireless communication function.

The base station 12 may be a network device in the wireless communication system. The wireless communication system may be the 4^{th} generation mobile communication (4G) system, also known as the Long-Term Evolution (LTE) system; or, the wireless communication system may be the 5^{th} generation mobile communication (5G) system, also known as the new radio (NR) system. Alternatively, the wireless communication system may be the next generation system following the 5G system. The access network in the 5G system may be called a new generation-radio access network (NG-RAN).

The base station 12 may be an evolved node base station (eNB) used in the 4G system. Alternatively, the base station 12 may also be a next generation node base station (gNB) adopting a centralized and distributed architecture in the 5G system. When the base station 12 adopts the centralized and distributed architecture, it usually includes a central unit (CU) and at least two distributed units (DUs). The central unit is provided with a protocol stack of a Packet Data Convergence Protocol (PDCP) layer, a Radio Link Control (RLC) layer, and a Media Access Control (MAC) layer. The distributed unit is provided with a protocol stack of a Physical (PHY) layer. Embodiments of the disclosure may not limit the implementation manner of the base station 12.

A wireless connection may be established between the base station 12 and the terminal 11 through a wireless air interface. In different embodiments, the wireless air interface may be a wireless air interface based on the 4G standard; or, the wireless air interface may be a wireless air interface based on the 5G standard, such as the wireless air interface is a new air interface; or the wireless air interface may be a wireless air interface based on the next generation mobile communication network technology standard following the 5G standard.

In some embodiments, an end to end (E2E) link may also be established between the terminals 11, for example, a vehicle to vehicle (V2V) communication, a vehicle to infrastructure (V2I) communication and a vehicle to pedestrian (V2P) communication in a vehicle to everything (V2X) communication.

In some embodiments, the above wireless communication system may also include a network management device 13.

The base stations 12 are coupled to the network management device 13 respectively. The network management device 13 may be a core network device in the wireless communication system. For example, the network management device 13 may be a mobility management entity (MME) of an evolved packet core (EPC). Alternatively, the network management device may also be other core network devices, such as a serving gateway (SGW), a public data network gateway (PGW), a policy and charging rules function (PCRF) unit or a home subscriber server (HSS). Alternatively, the network device 13 may be a location management function entity. The implementation form of the network management device 13 is not limited in the embodiments of the disclosure.

In the related art, a PRS is sent once in a slot. Symbols occupied by the PRS may be 2, 4, 6, and 12 consecutive symbols in the slot. The starting symbol position may be any one of the 1^{st} to 13^{th} symbols in the slot.

However, when the PRS is sent on an inactive BWP of the terminal, or on an active BWP but is different from a subcarrier spacing (SCS) currently configured for the terminal for downlink reception, a measurement gap needs to be configured for the terminal, so that the terminal can disconnect the downlink reception of the current SCS on the active BWP, and receive and measure the PRS.

In the same way, when a sending bandwidth of the SRS is different from the current active BWP of the terminal, or is the same as the active BWP but is different from the SCS, the terminal also needs a gap, disconnects from a normal connection with a serving cell for uplink and downlink communication on the active BWP during the gap, and sends the SRS using a frequency domain resource of the SRS.

When the terminal receives the PRS or sends the SRS, the communication with the serving cell is interrupted, which makes the user experience worse.

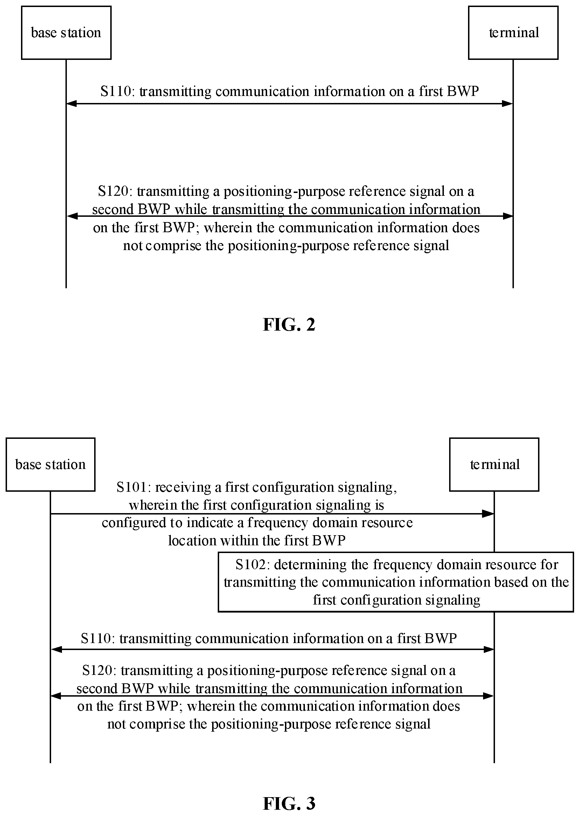

Embodiments of the disclosure propose a multi-BWP communication method, so that the terminal communicates normally with the serving cell through a first BWP, and receives and measures or sends a positioning-purpose reference signal through a second BWP, thereby preventing the terminal from communication information interruption that is caused during the positioning-purpose reference signal transmission. In detail, as illustrated in FIG. 2, embodiments of the disclosure provide a wireless communication method including the following.

S110, communication information is transmitted on a first BWP.

S120, a positioning-purpose reference signal is transmitted on a second BWP while transmitting the communication information on the first BWP, in which the communication information does not include the positioning-purpose reference signal.

The method is applied to the terminal. The terminal may be a mobile phone, a tablet, a wearable device, a vehicle-mounted terminal, or the like.

The terminal supports working on the first BWP and the second BWP simultaneously. Herein, the first BWP and the second BWP may be BWPs on licensed frequency bands or BWPs on unlicensed frequency bands.

In some embodiments of the disclosure, the first BWP and the second BWP are different BWPs and a difference between the two BWPs are as follows. Bandwidths of the first BWP and the second BWP are different. For example, without limitation, the bandwidth of the second BWP is greater than the bandwidth of the first BWP; and for another example, the bandwidths of the first BWP and the second BWP may be the same or different. Frequency domain resources included in the first BWP and the second BWP are different.

For example, a frequency domain relationship between the first BWP and the second BWP may include the following. The first BWP is contained within the second BWP, i.e., the first BWP is a subset of the second BWP; the first BWP and the second BWP partially overlap in the frequency domain; the first BWP and the second BWP do not overlap in the frequency domain and are continuously distributed in the frequency domain; or the first BWP and the second BWP do not overlap in the frequency domain and are spaced apart in the frequency domain.

The positioning-purpose reference signal is a reference signal used for positioning.

The positioning-purpose reference signal includes but is not limited to a downlink PRS or an uplink SRS.

The PRS is used for downlink positioning measurement and the SRS is used for uplink positioning measurement.

At this time, transmitting the positioning-purpose reference signal on the second BWP includes but is not limited to: receiving by the terminal the PRS on the second BWP; and /or, sending by the terminal the SRS on the second BWP.

The communication information herein does not include any information of the positioning-purpose reference signal, that is, the communication information may include any information and/or signal other than the positioning-purpose reference signal.

In some embodiments of the disclosure, the communication information may be any transmission content other than the positioning-purpose reference signal, including but not limited to: service data, control signaling, and/or reference signal. The reference signal at this time may include any reference signal required for uplink and downlink communication, such as a synchronization signal block, a demodulation reference signal (DMRS), a channel state information reference signal (CSI-RS), and/or a sounding reference signal for other purposes.

In some embodiments of the disclosure, to reduce the mutual interference between the transmission of the communication information and the transmission of the positioning-purpose reference signal and reduce the transmission delay, the communication information and the positioning-purpose reference signal are transmitted on different BWPs. In this way, the terminal can transmit the communication information on one BWP, and transmit the positioning-purpose reference signal on another BWP, so that the transmission of the positioning-purpose reference signal and the transmission of the communication information do not interfere with each other, and the transmission of the communication information does not need to be interrupted when the positioning-purpose reference signal is transmitted.

The transmission delay may include the following. The terminal works on the BWP that transmits the communication information, and if it needs to transmit the positioning-purpose reference signal on the new BWP at this time, the terminal needs to switch the working BWP, so that it may cause an interval and this interval will cause the transmission delay.

In some embodiments of the disclosure, the communication information is transmitted on the first BWP and the positioning-purpose reference signal is simultaneously transmitted on the second BWP, where the first BWP and the second BWP are two different BWPs that the terminal works simultaneously.

In some embodiments, transmitting the communication information includes: sending by the terminal the communication information and/or receiving by the terminal the communication information.

In some embodiments, transmitting the positioning-purpose reference signal includes: sending by the terminal the positioning-purpose reference signal and/or receiving by the terminal the positioning-purpose reference signal.

In some embodiments of the disclosure, different BWPs used for the transmission of the communication information and the transmission of the positioning-purpose reference signal are both working BWPs of the terminal. In this way, the terminal can transmit the communication information and/or transmit the positioning-purpose reference signal without switching the working BWP. Therefore, the transmission delay is small and the transmission rate is fast. Since the first BWP and the second BWP are different, the mutual interference between the transmission of the communication information and the transmission of the positioning-purpose reference signal can be reduced as much as possible.

In some embodiments, the bandwidth of the second BWP is greater than the bandwidth of the first BWP. The communication information transmitted on the first BWP may be any transmission information other than the positioning-purpose reference signal. When performing resource scheduling, if the first BWP is wider, more bit overhead is required for resource scheduling, or low-precision resource indication can be performed. To reduce this phenomenon, when the terminal transmits the positioning-purpose reference signal on the second BWP, the terminal can be configured not to transmit the communication information on the second BWP, but configured to transmit the communication information on the first BWP with the bandwidth smaller than the bandwidth of the second BWP. The base station only needs to perform resource scheduling on the first BWP for the terminal, thereby reducing bit overhead or realizing fine-grained resource indication.

In some embodiments, a frame structure on the second BWP and a frame structure on the first BWP may be the same or different. The frame structure herein includes an uplink and downlink frame structure. For example, in different uplink and downlink frame structures, time positions of uplink and downlink switching are different, and/or proportions of uplink resource and downlink resource in one frame structure is different, and the like.

In some embodiments, as illustrated in FIG. 3, the method further includes the following.

S101, a first configuration signaling is received, in which the first configuration signaling is configured to indicate a frequency domain resource location within the first BWP.

S102, the frequency domain resource for transmitting the communication information is determined based on the first configuration signaling.

The first configuration signaling herein may be a configuration signaling delivered by the base station. The first configuration signaling is a configuration signaling configured to allocate resources to the terminal on the first BWP but not to indicate frequency domain resources other than the first BWP. Therefore, this indication signaling can be designed based on the bandwidth of the first BWP, and the required number of bits and the indication manner are independent of the frequency domain resources other than the first BWP.

For example, the terminal receives the first configuration signaling in the serving cell, and then determines the frequency domain resource location for transmitting the communication information based on the first configuration signaling.

Since the bandwidth of the first BWP is smaller than the bandwidth of the second BWP, fine-grained resource indication can be accomplished with the smaller number of bits, reducing signaling overhead or realizing fine-grained resource indication.

In some embodiments, the second BWP is configured as a unique active BWP of the terminal. There may be only one active BWP in the terminal and the active BWP is a BWP in an active state. The active BWP needs to be indicated through an activation signaling sent by the base station or the active BWP is an initial BWP of the terminal, that is, a BWP used during an initial access. On the active BWP, the terminal can transmit a synchronization signal block (SSR), a control signaling on a control channel, data on a data channel, and a reference signal (including PRS, SRS, CSI-RS, or DMRS) with the base station. Of course, the active BWP may be an active downlink BWP (active DL BWP) or an active uplink BWP (active LJL BWP). The BWPs described in this disclosure are either all downlink BWPs or all uplink BWPs. For example, the first BWP, the second BWP, the third BWP, and the fourth BWP are all downlink BWPs; or the first BWP, the second BWP, the third BWP, and the fourth BWP are all uplink BWPs. In some embodiments of the disclosure, the second BWP is the unique active BWP of the terminal. For example, the second BWP is activated by using a medium access control (MAC) signaling or a physical layer signaling as the activation signaling. The physical layer signaling includes but is not limited to downlink control information (DCI). In this way, the terminal not only needs to transmit the positioning-purpose reference signal on the second BWP, but also needs to transmit the communication information with the serving cell on the second BWP. For example, when the second BWP is the active downlink BWP, the terminal needs to monitor an SSB, a CSI-RS, a DMRS, a physical downlink control channel (PDCCH), a physical downlink shared channel (PDSCH), or the like, on the second BWP. For example, when the second BWP is the active uplink BWP, the terminal needs to send the SRS, a physical uplink control channel (PUCCH), a physical uplink shared channel (PUSCH), or the like, on the second BWP. In this case, when the serving cell needs to indicate the frequency domain resource of the PDSCH of the terminal, it needs to indicate where the frequency domain resource of the terminal is within the second BWP. Because the second BWP may have a larger bandwidth, the number of bits for indicating the PDSCH frequency domain resource may require more. At the same time, the radio frequency device of the terminal always needs to work on the second BWP, which consumes a lot of power.

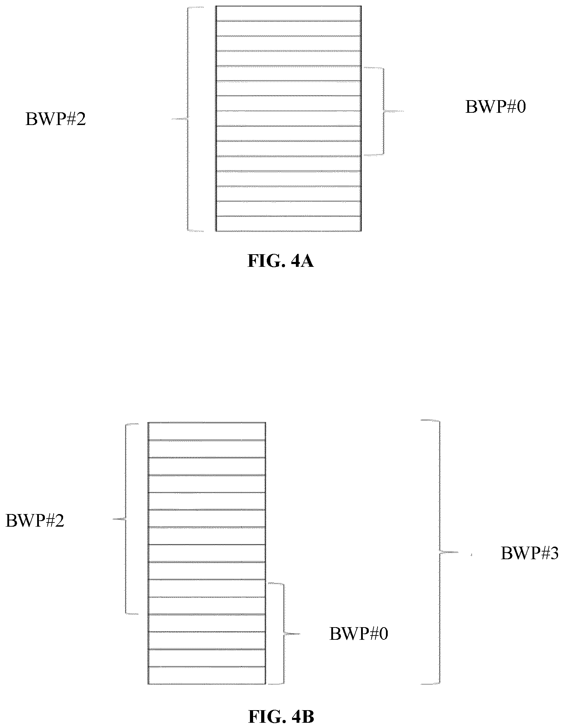

In some embodiments, the second BWP includes the first BWP. At this time, the first BWP is a sub-band of the second BWP. Referring to FIG. 4A, it is assumed that the first BWP is BWP#0 and the second BWP is BWP#2. Obviously, BWP#0 is included in BWP#2.

If the second BWP includes the first BWP, the terminal only needs to work on the second BWP, and can simultaneously use the first BWP and the second BWP to transmit the communication information and the positioning-purpose reference signal respectively, reducing the transmission interruption and delay.

In some embodiments, the first BWP is configured as a first active BWP of the terminal and the second BWP is configured as a second active BWP of the terminal.

The terminal may work on the first BWP and the second BWP at the same time. In this case, both the first BWP and the second BWP may be active BWPs. For distinction, in some embodiments, the first BWP may be configured as the first active BWP and the second BWP may be configured as the second active BWP. Then the terminal transmits the positioning-purpose reference signal on the second active BWP and transmits the communication information with the serving cell on the first active BWP. Thus, for example, when the serving cell needs to indicate the frequency domain resource of the PDSCH of the terminal, it only needs to indicate the terminal where the frequency domain resource is located within the first BWP. Since the bandwidth of the first BWP is smaller than the bandwidth of the second BWP, the number of bits used for indicating the PDSCH frequency domain resource will be less. At the same time, if the terminal has multiple sets of radio frequency device, one set of radio frequency devices can always work on the first BWP to reduce power consumption.

In other embodiments, the first BWP is configured as the unique active BWP of the terminal and the second BWP is configured as a positioning measurement BWP of the terminal.

The first BWP is the unique active BWP configured, and the terminal can transmit an SSR, a control signaling on a control channel, data on a data channel, and a reference signal (including but not limited to CSI-RS, DMRS) with the serving cell, on the first BWP.

The second BWP is only the positioning measurement BWP configured to transmit the positioning-purpose reference signal, so the terminal only needs to use the corresponding antenna port to transmit the positioning-purpose reference signal at the time of transmitting the positioning-purpose reference signal, without an additional configuration measurement interval.

In some embodiments, the second BWP and the first BWP partially overlap.

As illustrated in FIG. 4B, it is assumed that the first BWP is BWP#0 and the second BWP is BWP#2. Obviously, BWP#0 and BWP#2 overlap in the frequency domain. For example, BWP#0 is partially included in BWP#2 and partially outside of BWP#2. But both BWP#0 and BWP#2 are included in BWP#3.

In this case, the third BWP is configured as the unique active BWP of the terminal. The third BWP includes the first BWP and the second BWP. The third BWP herein may be BWP#3 in FIG. 4B.

The terminal may also have only one active BWP, and this active BWP is the third BWP that includes both the first BWP and the second BWP.

In some embodiments, the first BWP is configured as the first active BWP of the terminal and the second BWP is configured as the second active BWP of the terminal. Similarly, the terminal may also have two active BWPs, for example, the first active BWP and the second active BWP.

If the terminal can include two or more active BWPs, the first BWP is configured as the first active BWP of the terminal and the third BWP is configured as the second active BWP of the terminal. The third BWP includes the first BWP and the second BWP. At this time, the third BWP may be BWP#3 in FIG. 4B.

In some embodiments, the first BWP is configured as the unique active BWP of the terminal. At this time, the second BWP is configured as the positioning measurement BWP for transmitting the positioning-purpose reference signal.

The bandwidth of the first BWP is smaller than the bandwidth of the second BWP and is smaller than the bandwidth of the third BWP including both the first BWP and the second BWP. Therefore, when the first BWP is uniquely configured as the active BWP of the terminal, the terminal has characteristics of low signaling overhead when receiving the PDSCH or PUSCH resource scheduling indication.

In some embodiments, the method further includes: receiving a second configuration signaling, in which the second configuration signaling is configured to configure the second BWP, and the second BWP includes the first BWP.

The second configuration signaling may come from a non-access network or an access network. For example, the second configuration signaling comes from a LMF entity, or come from the base station of the access network. The second configuration signaling and the first configuration signaling may be independent of each other, so that the coupling between the first BWP and the second BWP during configuration is reduced and the flexible configuration of the first BWP and the second BWP is realized.

If the second configuration signaling is sent by the LMF, the second configuration signaling is transparently sent through the base station. The terminal may receive the second configuration signaling in the serving cell or the neighboring cell.

In some embodiments, the method further includes: switching the BWP for transmitting the communication information from a fourth BWP to the first BWP contained in the second BWP.

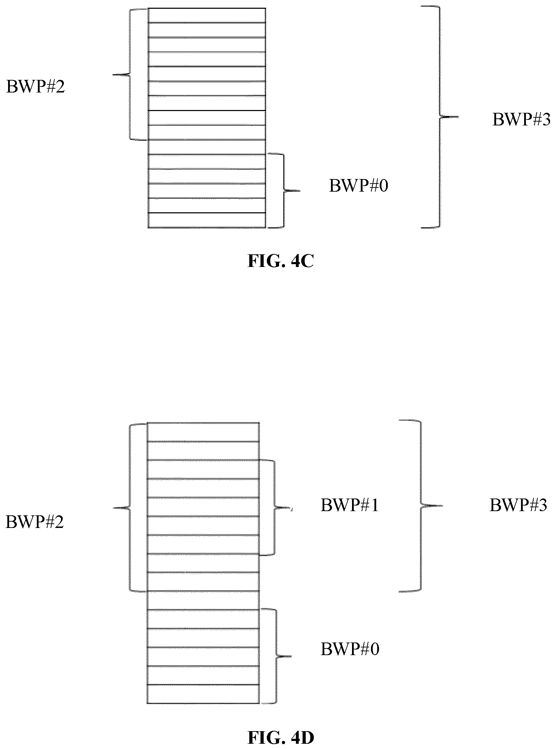

In some embodiments of the disclosure, the BWP that originally transmits the communication information is the fourth BWP, which is not included in the second BWP. To reduce the communication information transmission interruption and/or the switching delay caused by the switching between the communication of the communication information and the communication of the positioning-purpose reference signal, the communication information is switched from the fourth BWP to the first BWP contained in the second BWP. Referring to FIG. 4D, the fourth BWP may be BWP#0 in FIG. 4D, the second BWP may be BWP#2, the first BWP may be BWP#1, and the third BWP may be equal to the BWP#3.

In some embodiments, the method further includes: configuring priorities for the positioning-purpose reference signal and the communication information, respectively; and determining, based on the priorities, the communication information or the positioning-purpose reference signal that is transmitted on an overlapping resource of the first BWP and the second BWP.

If there is resource overlap between the first BWP and the second BWP, resource conflict may occur at least at the location of the resource overlap. In some embodiments of the disclosure, to solve the problem of such resource conflict, the priorities are configured to the positioning-purpose reference signal and the communication information respectively, and use the configured priorities to resolve the transmission conflict of the positioning-purpose reference signal and the communication information that need to use the overlapping resource at the same time.

In some cases, the priorities of the positioning-purpose reference signal includes: a first priority and a second priority; in which the first priority is higher than the second priority.

The priorities of the communication information include: a third priority and a fourth priority; in which the third priority is higher than the fourth priority.

For example, the positioning-purpose reference signal can be divided into two priority levels and the communication information can also be divided into two priority levels. The two priorities of the positioning-purpose reference signal can be used to determine the transmission priority of the positioning-purpose reference signals and the two priorities of the communication information can be used to determine the transmission priority of different communication information.

Of course, the priorities herein can also be used for the transmission priority order between the positioning-purpose reference signal and the communication information.

The priority relationship between the priority of the communication information and the priority of the positioning-purpose reference signal can be configured separately. For example, in some embodiments, the first priority is higher than the fourth priority and lower than the third priority; and the second priority is lower than the fourth priority. At this time, the order of priorities is: the third priority, the first priority, the fourth priority, and the second priority.

For another example, in other embodiments, the fourth priority is higher than the first priority and the second priority, respectively. In this case, all priorities of the communication information are higher than any one of the priorities of the positioning-purpose reference signal. That is, the order of priorities is: the third priority, the fourth priority, the first priority, and the second priority.

In some embodiments, configuring the priorities for the positioning-purpose reference signal and the communication information, respectively, includes: configuring the priorities for the positioning-purpose reference signal and the communication information respectively based on transmission delay requirements of the positioning-purpose reference signal and the communication information.

For example, the higher the transmission delay requirement, the lower the tolerance for the transmission delay. In this case, a higher priority can be configured, otherwise a lower priority can be configured.

For example, the communication information can be configured with two priorities. Taking service data of enhanced mobile broadband (eMBB) and service data of ultra-reliable and low latency communications (URLLC) as an example for illustration. The transmission delay tolerance of the service data of the eMBB is higher than the transmission delay tolerance of the service data of the URLLC. Therefore, the priority of the service data of the URLLC can be configured to be higher than the priority of the service data of the eMBB.

In some embodiments, the second BWP and the first BWP do not overlap. The non-overlapping of the second BWP and the first BWP indicates that the two BWPs do not contain the same frequency domain resource.

In some embodiments, a fifth BWP is configured as the unique active BWP of the terminal. The fifth BWP includes the first BWP and the second BWP; or the fifth BWP includes the first BWP, the second BWP, and an interval between the first BWP and the second BWP.

If the first BWP and the second BWP are consecutive in the frequency domain, the fifth BWP includes the first BWP and the second BWP, and the fifth BWP includes the first BWP, the second BWP, and the interval between the first BWP and the second BWP, which have the same meaning.

If the first BWP and the second BWP are separated in the frequency domain, the fifth BWP includes the first BWP and the second BWP, and the fifth BWP includes the first BWP, the second BWP, and the interval between the first BWP and the second BWP, which have different meanings. The bandwidth of the fifth BWP including the interval between the first BWP and the second BWP is larger.

At this time, the radio frequency device of the terminal can work on the fifth BWP, and the fifth BWP is a continuous bandwidth, and the terminal implementation is simple. For example, the radio frequency device herein may include, but is not limited to, antenna port.

Referring to FIG. 4C, the first BWP may be BWP#0, the second BWP may be BWP#2, and the fifth BWP may be BWP#3. There is no overlap between BWP#0 and BWP#2 in FIG. 4C.

In some embodiments, the first BWP is configured as the first active BWP of the terminal and the second BWP is configured as the second active BWP of the terminal.

In other embodiments, the first BWP is configured as the first active BWP of the terminal and the fifth BWP is configured as the second active BWP of the terminal, in which the fifth BWP includes the first BWP and the second BWP, or the fifth BWP includes the first BWP, the second BWP, and the interval between the first BWP and the second BWP.

In some embodiments, the first BWP is configured as the unique active BWP of the terminal and the second BWP is configured as the positioning measurement BWP.

In some embodiments, the communication information includes at least one of: an SSR; a reference signal for a purpose of uplink and downlink communication; a control signaling transmitted on a control channel; or service data transmitted on a data channel.

The SSR includes a primary synchronization signal, a secondary synchronization signal, and/or physical broadcast channel (PBCH) information. The SSR herein can be used for synchronization between the terminal and the base station. The broadcast information transmitted on the PBCH may be any information directed to all terminals in the cell.

The reference signal for the purpose of uplink and downlink communication is used for uplink and downlink communication between the terminal and the base station.

The reference signal for the purpose of uplink and downlink communication includes but is not limited to at least one of: a demodulation reference signal; a channel state information reference signal; or a sounding reference signal.

The communication signaling transmitted on the control channel includes but is not limited to: a control signaling transmitted on the physical downlink control channel and/or a control signaling transmitted on the physical uplink control channel.

The service data transmitted on the data channel includes but is not limited to: service data transmitted on the physical downlink shared channel and/or service data transmitted on the physical uplink shared channel.

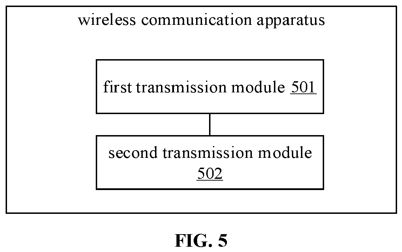

As illustrated in FIG. 5, some embodiments of the disclosure provide a wireless communication apparatus, including: a first transmission module 501 and a second transmission module 502.

The first transmission module 501 is configured to transmit communication information on a first BWP.

The second transmission module 502 is configured to transmit a positioning-purpose reference signal on a second BWP while transmitting the communication information on the first BWP.

The communication information does not include the positioning-purpose reference signal.

In some embodiments, the first transmission module 501 and the second transmission module 502 may be program modules; and after the program modules are executed by the processor, they can transmit the communication information and the positioning-purpose reference signal on the first BWP and the second BWP, respectively.

In some embodiments, the first transmission module 501 and the second transmission module 502 may be software-hardware combination modules; the software-hardware combination modules include but are not limited to: a programmable array; and the programmable array includes but is not limited to a complex programmable array or a field programmable array.

In some embodiments, the first transmission module 501 and the second transmission module 502 may be pure hardware modules; and the pure hardware modules include but are not limited to application specific integrated circuits.

In some embodiments of the disclosure, to reduce the mutual interference between the transmission of the communication information and the transmission of the positioning-purpose reference signal and reduce the transmission delay, the communication information and the positioning-purpose reference signal are transmitted on different BWPs. In this way, the terminal can transmit the communication information on one BWP, and transmit the positioning-purpose reference signal on another BWP, so that the transmission of the positioning-purpose reference signal and the transmission of the communication information do not interfere with each other, and the transmission of the communication information does not need to be interrupted when the positioning-purpose reference signal is transmitted.

In some embodiments, the apparatus further includes: a first receiving module, configured to receive a first configuration signaling, in which the first configuration signaling is configured to indicate a frequency domain resource location within the first BWP; and a first determining module, configured to determine the frequency domain resource for transmitting the communication information based on the first configuration signaling.

In some embodiments, the second BWP includes the first BWP.

In some embodiments, the second BWP is configured as a unique active BWP of a terminal.

In some embodiments, the first BWP is configured as a first active BWP of a terminal and the second BWP is configured as a second active BWP of the terminal.

In some embodiments, the first BWP is configured as a unique active BWP of a terminal and the second BWP is configured as a positioning measurement BWP of the terminal.

In some embodiments, the second BWP and the first BWP partially overlap.

In some embodiments, a third BWP is configured as a unique active BWP of a terminal and the third BWP is a union of the first BWP and the second BWP.

In some embodiments, the first BWP is configured as a first active BWP of a terminal and the second BWP is configured as a second active BWP of the terminal; or, the first BWP is configured as the first active BWP of the terminal, a third BWP is configured as the second active BWP of the terminal, and the third BWP is a union of the first BWP and the second BWP.

In some embodiments, the first BWP is configured as a unique active BWP of a terminal.

In some embodiments, the apparatus further comprises: a second receiving module configured to receive a second configuration signaling, in which the second configuration signaling is configured to configure the second BWP, and the second BWP includes the first BWP, or switch the BWP for transmitting the communication information from a fourth BWP to the first BWP, in which the fourth BWP is located outside the second BWP.

In some embodiments, the apparatus further includes: a configuration module, configured to configure priorities for the positioning-purpose reference signal and the communication information, respectively; and a second determining module configured to determine, based on the priorities, the communication information or the positioning-purpose reference signal that is transmitted on an overlapping resource of the first BWP and the second BWP.

In some embodiments, the priorities of the positioning-purpose reference signal include a first priority and a second priority; in which the first priority is higher than the second priority; and the priorities of the communication information include a third priority and a fourth priority; in which the third priority is higher than the fourth priority.

In some embodiments, the first priority is higher than the fourth priority and lower than the third priority; and the second priority is lower than the fourth priority.

In some embodiments, the fourth priority is higher than the first priority and the second priority, respectively.

In some embodiments, the configuration module is configured to configure the priorities for the positioning-purpose reference signal and the communication information respectively based on transmission delay requirements of the positioning-purpose reference signal and the communication information.

In some embodiments, the second BWP and the first BWP do not overlap.

In some embodiments, a fifth BWP is configured as a unique active BWP of a terminal; the fifth BWP includes the first BWP and the second BWP; or, the fifth BWP includes the first BWP, the second BWP, and an interval between the first BWP and the second BWP.

In some embodiments, the first BWP is configured as a first active BWP of a terminal and the second BWP is configured as a second active BWP of the terminal; or, the first BWP is configured as the first active BWP of the terminal and a fifth BWP is configured as the second active BWP of the terminal; in which the fifth BWP includes the first BWP and the second BWP, or, the fifth BWP includes the first BWP, the second BWP, and an interval between the first BWP and the second BWP.

In some embodiments, the first BWP is configured as a unique active BWP of a terminal and the second BWP is configured as a positioning measurement BWP of the terminal.

In some embodiments, the positioning-purpose reference signal includes: a downlink PRS; or an SRS for a purpose of uplink positioning.

In some embodiments, the communication information includes at least one of: an SSR; a reference signal for a purpose of uplink and downlink communication; a control signaling transmitted on a control channel; or service data transmitted on a data channel.

In some embodiments, the wireless communication method includes: transmitting communication information on a first BWP; and transmitting a positioning-purpose reference signal on a second BWP; in which the second BWP and the first BWP are different BWPs where the terminal works simultaneously; and the positioning-purpose reference signal is different from the communication information.

In some embodiments, the bandwidth of the terminal can be divided into multiple BWPs and the terminal only works on part of the BWPs.

In some embodiments, the bandwidth of the second BWP is greater than the bandwidth of the first BWP.

The second BWP includes the first BWP; and the terminal works on the second BWP. For example, the antenna port of the terminal works on the second BWP.

In some embodiments, the second BWP and the first BWP partially overlap; and the terminal works on a union of the first BWP and the second BWP.

In some embodiments, the method further includes: configuring the priorities for the positioning-purpose reference signal and the communication information, respectively; in which, the priority is at least configured to determine transmission content on the first BWP and/or the first BWP.

For example, when there is an overlapping resource on the first BWP and the second BWP, and the positioning-purpose reference signal and the communication information need to be transmitted at the same time, the communication information or the positioning-purpose reference signal with a higher priority is preferentially transmitted based on the priorities.

For another example, multiple types of communication information need to be transmitted simultaneously on the first BWP, and communication information with a higher priority may also be transmitted preferentially based on the priorities of the multiple types of communication information.

For another example, multiple positioning-purpose reference signals need to be transmitted on the second BWP at the same time, and the positioning-purpose reference signal with a higher priority may also be transmitted preferentially based on the priorities of multiple positioning-purpose reference signals.

In some embodiments, the method further comprises: configuring the priorities for the positioning-purpose reference signal and the communication information respectively based on transmission delay requirements of the positioning-purpose reference signal and the communication information.

The communication information transmitted on the first BWP includes at least one of: a reference signal of uplink and downlink communication; a control signaling transmitted on a control channel; or service data transmitted on a data channel.

In some embodiments, the second BWP and the first BWP do not overlap and are continuously distributed in the frequency domain; the terminal works on the union of the first BWP and the second BWP.

In some embodiments, the second BWP and the first BWP are distributed at interval in the frequency domain; the terminal works on the first BWP, the second BWP, and the interval between the first BWP and the second BWP in the frequency domain.

In other embodiments, the terminal performs normal communication with the serving cell through the first BWP, and simultaneously receives and measures of the positioning-purpose reference signal or sends the positioning-purpose reference signal through the second BWP. The first BWP and the second BWP have the following relationship. First, it is assumed that the BWP of the terminal is called BWP#0 before receiving the positioning-purpose reference signal.

The configuration parameter of the positioning-purpose reference signal indicates that the BWP of the positioning-purpose reference signal is the second BWP: BWP#2.

Case 1: BWP#2 contains BWP#0 (in FIG. 4A), then the first BWP remains BWP#0. That is, the terminal continues to perform normal uplink and downlink communication with the serving cell on BWP#0, and sends or receives the positioning-purpose reference signal on the larger bandwidth BWP#2.

When the uplink and downlink frame structure on BWP#2 is different from the uplink and downlink frame structure on BWP#0, a new priority rule is defined, and selection is made according to the priority rule.

For example, the positioning-purpose reference signal may be divided into: a high-priority positioning-purpose reference signal and a low-priority positioning-purpose reference signal. The normal communication information may be divided into: high-priority data and low-priority data. The priority can be determined according to the delay requirement, and the priority of the low delay is higher.

The high priority of the positioning-purpose reference signal is higher than the low priority of the communication information; or, in other combinations, the priority of the communication information is higher than the priority of the positioning-purpose reference signal.

When resources occupied by the data of the normal communication on BWP#0 and the positioning-purpose reference signal conflict, the above priority rule is also used for selection.

To send or receive the positioning-purpose reference signal on the larger bandwidth BWP#2, it is only necessary to ensure that the antenna port used for transmission of the positioning-purpose reference signal works on the BWP#2.

It is continuing to maintain the normal communication with the serving cell on BWP#0, including various uplink and downlink communication reference signals, control channels, data channels, SSRs, etc., and the indication range for uplink and downlink communication frequency domain resources is within BWP#0. If the indication on BWP#2 is suppressed, it will bring greater signaling overhead or the frequency domain granularity of scheduling is too large.

Case 2: BWP#2 includes a part of BWP#0 (FIG. 4B), then the terminal needs to work on BWP#3. BWP#3 is the union of BWP#2 and BWP#0. The first BWP is still BWP# 0.

If the resource for the terminal to transmit data is: the overlapping part of BWP#0 and BWP#2, the conflict of the uplink and downlink frame structure and the priority of resource conflict are the same as in case 1, otherwise, each is independent.

Case 3: BWP#2 and BWP#0 do not overlap at all (FIG. 4C), and two solutions are as follows.

Referring to FIG. 4C, case 3-1: the terminal needs to work on BWP#3, BWP#3 is the union of BWP#2 and BWP#0, and perhaps BWP#3 also includes the interval of BWP#2 and BWP#0. In this way, the terminal still communicates normally with the base station on BWP#0, and performs transmission of the positioning-purpose reference signal on BWP#2. That is, the first BWP is BWP#0, and the second BWP is BWP#2.

Since BWP#2 and BWP#0 do not overlap at all, the uplink and downlink frame structures and frequency domain resources on the two BWPs are independent of each other and will not conflict.

Case 3-2: the terminal transmits the positioning-purpose reference signal on BWP#2, and communicates with the base station normally on BWP#1 in BWP#2, that is, the BWP that communicates with the base station is switched, and is switched from BWP#0 to BWP#1. So, the first BWP is BWP#1.

Since BWP#2 includes BWP#1, it is like Case 1. Reference should be made to case 1 for the problem of uplink and downlink frame structures and resource conflict resolution.

Individual BWPs can be licensed spectrum or unlicensed frequency domain.

In some embodiments of the disclosure, the terminal is configured to communicate on multiple BWPs at the same time, that is, the BWP for sending or receiving the positioning-purpose reference signal is one BWP and the BWP for the normal communication between the terminal and the serving cell is another BWP, thereby maintaining the normal communication while sending or receiving the positioning-purpose reference signal, and reducing the impact of communication interruptions.

Multiple BWPs are configured for the terminal, and the BWP used by the terminal for sending or receiving the positioning-purpose reference signal is different from the BWP used by the terminal to perform uplink and downlink communication with the serving cell.

In a resource overlapping solution: defining the priorities of the uplink and downlink frame structures. If different uplink and downlink frame structures are used on the first BWP and the second BWP, but the resources of the first BWP and the second BWP overlap, which uplink and downlink frame structure is used on the overlapping part of the resources can be determined based on the determined priorities. For example, the uplink and downlink frame structure with the higher priority is preferentially adopted.

For example, the uplink and downlink frame structures used by the positioning-purpose reference signal and the communication information are different. If the resource of the overlapping part of the first BWP and the second BWP needs to use different uplink and downlink frame structures for transmission at the same time, the uplink and downlink frame structure with the high-priority may be transmitted preferentially. Since, the uplink and downlink frame structures have a corresponding relationship with the positioning-purpose reference signal and communication information, it is also equivalent to determining that the content transmitted on the overlapping resource is the positioning-purpose reference signal and/or communication information.

In another resource overlapping solution: defining the priorities of the positioning-purpose reference signal and the normal communication information.

When there is a resource conflict between the first BWP and the second BWP, the transmission conflict is resolved according to the priorities, to transmit the positioning-purpose reference signal and the communication information from high to low based on the priority order.

Some embodiments of the disclosure provide a terminal, including a processor, a transceiver, a memory, and an executable program stored on the memory and capable of being executed by the processor. The processor is configured to perform the wireless communication method provided in any of the foregoing technical solutions when executing the executable program, for example, the methods as illustrated in FIG. 2 and/or FIG. 3.

The communication device may be the base station or LTE.

The transceiver includes one or more antennas and a radio frequency device connected to the one or more antennas.

The memory may include various types of storage media, which are non-transitory computer storage media which can continue to memorize and store information on the communication device after the power is turned off. Herein, the communication device includes the base station or UE.

The processor can be connected to the memory through a bus or the like, and is configured to read the executable program stored in the memory, and perform the wireless communication method provided by any of the foregoing embodiments, such as the wireless communication method in FIG. 2 and/or FIG. 3.

Some embodiments of the disclosure provide a computer storage medium, where an executable program is stored in the computer storage medium; and when the executable program is executed by a processor, the wireless communication method provided by any of the foregoing embodiments can be performed, for example, the wireless communication method in FIG. 2 and/or FIG. 3.

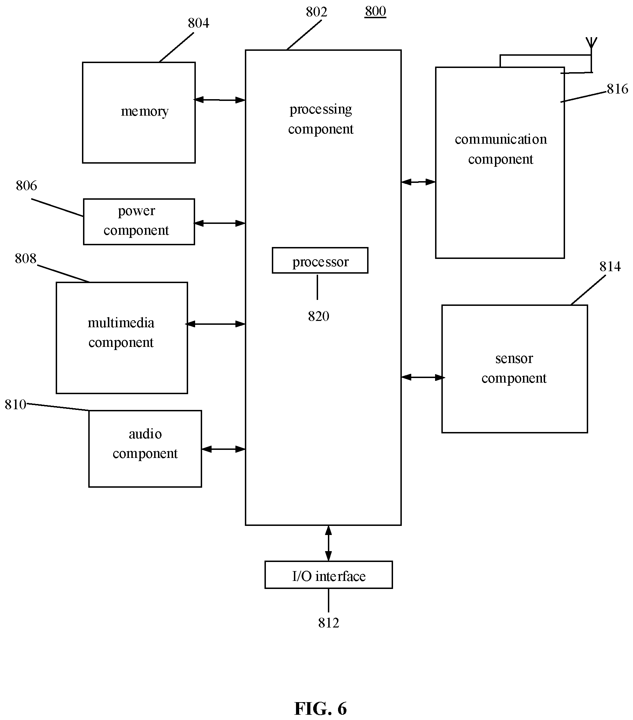

FIG. 6 is a block diagram of a UE 800 (i.e., the terminal) according to some embodiments. For example, the LTE 800 may be a mobile phone, a computer, a digital broadcast terminal, a messaging device, a gaming console, a tablet, a medical device, exercise equipment, a personal digital assistant, and the like.

Referring to FIG. 6, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the LTE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the LTE 800, and a change in temperature of the LTE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the LTE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 804, executable by the processor 820 in the UE 800, for performing the above-described methods. For example, the non-transitory computer-readable storage medium may be a ROM, a RAM, a CD-ROM, a magnetic tape, a floppy disc, an optical data storage device, and the like.

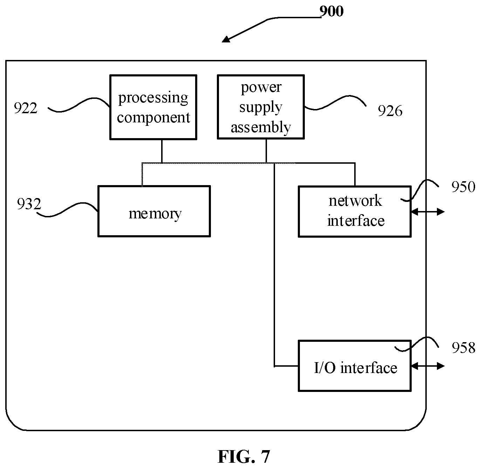

As illustrated in FIG. 7, some embodiments of the disclosure illustrate a structure of a base station. For example, the base station 900 may be provided as a network device. Referring to FIG. 7, the base station 900 includes a processing component 922 which includes at least one processor, and a memory resource represented by a memory 932 for storing instructions executable by the processing component 922, such as application programs. The application programs stored in the medium 932 include one or more modules. Each module may include a set of instructions. Further, the processing component 922 may be configured to execute the instructions to perform the method as described above, such as the wireless communication method in FIG. 2 to FIG. 3.

The Base station 900 may also include a power supply assembly 926 configured to perform power management of the base station 900, a wired or wireless network interface 950 configured to connect the base station 900 to a network, and an I/O interface 958. The base station 900 may operate based on an operating system stored in the memory 932, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A wireless communication method, comprising:
transmitting communication information on a first bandwidth part (BWP); and
transmitting a positioning-purpose reference signal on a second BWP while transmitting the communication information on the first BWP;
wherein the communication information does not comprise the positioning-purpose reference signal.

2. The method as claimed in claim 1, further comprising:
receiving a first configuration signaling, wherein the first configuration signaling is configured to indicate a frequency domain resource location within the first BWP; and
determining the frequency domain resource for transmitting the communication information based on the first configuration signaling.

3. The method as claimed in claim 1 or 2, wherein the second BWP comprises the first BWP.

4. The method as claimed in claim 3, wherein the second BWP is configured as a unique active BWP of a terminal.

5. The method as claimed in claim 3, wherein the first BWP is configured as a first active BWP of a terminal and the second BWP is configured as a second active BWP of the terminal.

6. The method as claimed in claim 3, wherein the first BWP is configured as a unique active BWP of a terminal and the second BWP is configured as a positioning measurement BWP of the terminal.

7. The method as claimed in claim 3, further comprising:
switching the BWP for transmitting the communication information from a fourth BWP to the first BWP, wherein the fourth BWP is located outside the second BWP.

8. The method as claimed in claim 1 or 2, wherein the second BWP and the first BWP partially overlap.

9. The method as claimed in claim 8, wherein a third BWP is configured as a unique active BWP of a terminal and the third BWP is a union of the first BWP and the second BWP.

10. The method as claimed in claim 8, wherein the first BWP is configured as a first active BWP of a terminal and the second BWP is configured as a second active BWP of the terminal;
or, the first BWP is configured as the first active BWP of the terminal, a third BWP is configured as the second active BWP of the terminal, and the third BWP is a union of the first BWP and the second BWP.

11. The method as claimed in claim 8, wherein the first BWP is configured as a unique active BWP of a terminal and the second BWP is configured as a positioning measurement BWP of the terminal.

12. The method as claimed in claim 1, further comprising:
receiving a second configuration signaling, wherein the second configuration signaling is configured to configure the second BWP, and the second BWP comprises the first BWP.

13. The method as claimed in any one of claims 1 to 12, further comprising:
configuring priorities for the positioning-purpose reference signal and the communication information, respectively; and
determining, based on the priorities, the communication information or the positioning-purpose reference signal that is transmitted on an overlapping resource of the first BWP and the second BWP.

14. The method as claimed in claim 13, wherein the priorities of the positioning-purpose reference signal comprise a first priority and a second priority; in which the first priority is higher than the second priority; and
the priorities of the communication information comprise a third priority and a fourth priority; in which the third priority is higher than the fourth priority.

15. The method as claimed in claim 14, wherein the first priority is higher than the fourth priority and lower than the third priority; and
the second priority is lower than the fourth priority.

16. The method as claimed in claim 14, wherein the fourth priority is higher than the first priority and the second priority, respectively.

17. The method as claimed in claim 14, wherein configuring the priorities for the positioning-purpose reference signal and the communication information, respectively, comprises:
configuring the priorities for the positioning-purpose reference signal and the communication information respectively based on transmission delay requirements of the positioning-purpose reference signal and the communication information.

18. The method as claimed in claim 1 or 2, wherein the second BWP and the first BWP do not overlap.

19. The method as claimed in claim 18, wherein a fifth BWP is configured as a unique active BWP of a terminal;
the fifth BWP comprises the first BWP and the second BWP;
or, the fifth BWP comprises the first BWP, the second BWP, and an interval between the first BWP and the second BWP.

20. The method as claimed in claim 18, wherein the first BWP is configured as a first active BWP of a terminal and the second BWP is configured as a second active BWP of the terminal; or,
the first BWP is configured as the first active BWP of the terminal and a fifth BWP is configured as the second active BWP of the terminal; in which the fifth BWP comprises the first BWP and the second BWP, or, the fifth BWP comprises the first BWP, the second BWP, and an interval between the first BWP and the second BWP.

21. The method as claimed in claim 18, wherein the first BWP is configured as a unique active BWP of a terminal and the second BWP is configured as a positioning measurement BWP of the terminal.

22. The method as claimed in claim 1, wherein the positioning-purpose reference signal comprises:
a downlink positioning reference signal (PRS); or
a sounding reference signal (SRS) for a purpose of uplink positioning.

23. The method as claimed in claim 1 or 2, wherein the communication information comprises at least one of:
a synchronization signal block;
a reference signal for a purpose of uplink and downlink communication;
a control signaling transmitted on a control channel; or
service data transmitted on a data channel.

24. A wireless communication apparatus, comprising:
a first transmission module configured to transmit communication information on a first bandwidth part (BWP); and
a second transmission module configured to transmit a positioning-purpose reference signal on a second BWP while transmitting the communication information on the first BWP;
wherein, the communication information does not comprise the positioning-purpose reference signal.

25. A terminal, comprising a processor, a transceiver, a memory, and an executable program stored on the memory and capable of being executed by the processor, wherein, the processor is configured to execute the executable program to perform the method as claimed in any one of claims 1 to 23.

26. A computer storage medium storing an executable program, wherein when the executable program is executed by a processor, the method as claimed in any one of claims 1 to 23 is performed.
